# EUROPEAN PATENT SPECIFICATION

(11) **EP 4 438 282 B1**
(45) Date of publication and mention of the grant of the patent: **02.12.2026**
(21) Application number: 24166695.7
(22) Date of filing: 27.03.2024
(51) Int. Cl.: B29D 30/06

(54) **SEGMENTED CURING RING AND TIRE MOLD FOR NPT ELASTOMER BANDS AND METHOD FOR CURING A GREEN ELASTOMER BAND**
SEGMENTIERTER HÄRTUNGSRING UND REIFENFORM FÜR NPT-ELASTOMERBÄNDER UND VERFAHREN ZUR HÄRTUNG EINES GRÜNEN ELASTOMERBANDES
ANNEAU DE VULCANISATION SEGMENTÉ ET MOULE POUR PNEU POUR BANDES D'ÉLASTOMÈRE NPT ET PROCÉDÉ DE VULCANISATION D'UNE BANDE D'ÉLASTOMÈRE VERT

(30) Priority: 29.03.2023 US 202318191973
(43) Date of publication of application: 02.10.2024
(73) Proprietor: The Goodyear Tire & Rubber Company, Akron, OH 44316 (US)
(72) Inventor: HOGAN, Michael James, Tallmadge, 44278 (US); STOILA, George Michael, Tallmadge, 44278 (US); ANDERSON, John Edward, Atwater, 44201 (US)
(74) Representative: Leslie, Edward

(56) References cited:
- CA-A- 977 112
- US-A1- 2006 113 708

## Description

### FIELD OF THE INVENTION

The present disclosure relates generally to a segmented curing ring assembly for manufacturing elastomer bands for non-pneumatic tires (e.g., shear bands and/or shear band and tread band assemblies) and, more particularly, to a curing ring assembly that can be utilized within a tire mold for curing non-pneumatic tire elastomer bands (e.g., shear bands) using pneumatic tire curing equipment, such as pneumatic tire curing press machines and/or pneumatic tire curing molds. It also relates to a method for curing a green elastomer band.

### BACKGROUND OF THE INVENTION

A non-pneumatic tire (NPT) is an airless tire, also known as a flat-free tire, and is not supported by air pressure to carry the weight of a vehicle. Rather, the treads of an NPT support the weight of the vehicle using a web or spoke design. NPTs can be used on a variety of vehicles, especially where the risk of puncture is high, such as: riding lawn mowers, motorized golf carts, passenger vehicles, trucks, construction equipment, airplanes and/or the like. NPTs are often more durable than conventional pneumatic tires and require less maintenance. These advantages may be especially useful in off-road or hazardous road conditions.

However, the structural difference between NPTs and conventional pneumatic tires inhibits the use of conventional manufacturing equipment in the construction of NPTs. As such, specialized equipment is typically employed to manufacture NPTs, which can be cost prohibitive and/or can limit the availability of NPT manufacturing locations.

US 2006/0113708 describes a tire mold in accordance with the preamble of claim 1.

CA 977 112 A describes a segmental mold mechanism for curing a pneumatic tire.

### SUMMARY OF THE INVENTION

The invention relates to a tire mold in accordance with claim 1 and to a method for curing a green elastomer band in accordance with claim 6.

Dependent claims refer to preferred embodiments of the invention.

In accordance with one or more preferred aspects of the invention, a tire mold is provided. The tire mold comprises a base plate having a plurality of channels oriented along a radial direction. The tire mold further comprises a plurality of inner segments configured to engage an inner radius of the elastomer band. Each inner segment includes an anchor for reception into a respective channel of the plurality of channels. Also, the plurality of inner segments are configured to translate along the radial direction. Further, the tire mold comprises a plurality of outer segments configured to engage an outer radius of the elastomer band.

In another preferred aspect, a method for curing a non-pneumatic tire elastomer band is provided. The method comprises assembling a segmented curing ring comprising a plurality of inner mold segments configured to travel across a base plate along a radial direction. The method also comprises positioning a green elastomer band between the plurality of inner segments and one or more outer mold segments. Further, the method comprises exerting an outward pressure on an inner surface of the green elastomer band via the plurality of inner mold segments while exerting an inward pressure on an outer surface of the green elastomer band via the one or more outer mold segments.

Also, an elastomer band curing ring is provided. The elastomer band curing ring comprises a plurality of plates that are vertically oriented from a base. The plurality of plates are configured to translate across the channels along a radial direction. Also, the plurality of plates are positioned adjacent to each other to form an inner molding surface that is substantially flat along an axial direction that is perpendicular to the radial direction.

### DEFINITIONS

"Axial" and "axially" mean lines or directions that are parallel to the axis of rotation of the tire.

"Circumferential" means lines or directions extending along the perimeter of the surface of the annular tread perpendicular to the axial direction.

"Green band" means a shear band that has not yet been cured and/or has not had treads added thereupon.

"Inner" or "inwardly" means toward a central axis of the segmented curing ring.

"Outer" or "outwardly" means away from a central axis of the segmented curing ring.

"Non-pneumatic tire" refers to an airless tire, also known as a flat-free tire, that does not need to be supported by air pressure to support the weight.

"Pneumatic tire" means a laminated mechanical device of generally toroidal shape (usually an open-torus) having beads and a tread and made of rubber, chemicals, fabric and steel or other materials. When mounted on the wheel of a motor vehicle, the tire through its tread provides traction and contains the fluid that sustains the vehicle load.

"Radial" and "radially" are used to mean directions radially toward or away from the axis of rotation of the tire.

"Tread" means a molded rubber component, which includes that portion of the tire that comes into contact with the road when the tire is normally inflated and under normal load. The tread has a depth conventionally measured from the tread outer surface to the bottom of the deepest groove of the tire.

"Tread block" or "Tread element" or "Traction element" means a rib or a block element defined by a shape having adjacent grooves.

### BRIEF DESCRIPTION OF THE DRAWINGS

Although the invention is generally described in the context of these preferred embodiments, it should be understood that the figures are not intended to limit the spirit and scope of the invention to these particular embodiments in any way. The invention will be described by way of example and with reference to the accompanying drawings in which:
FIG. 1 illustrates a diagram of a non-limiting example segmented curing ring that can be utilized with one or more tire curing press machines to generate a cured elastomer band (e.g., NPT shear band and/or shear band and tread assembly) in accordance with one or more embodiments described herein.
FIG. 2A illustrates a top-down perspective of a non-limiting example first type of plate that can be included in a segmented curing ring in accordance with one or more embodiments described herein.
FIGS. 2B-C illustrate side perspectives a non-limiting example first type of plate that can be included in a segmented curing ring in accordance with one or more embodiments described herein.
FIG. 3A illustrates a top-down perspective of a non-limiting example first type of plate that can be included in a segmented curing ring in accordance with one or more embodiments described herein.
FIGS. 3B-C illustrate side perspectives a non-limiting example first type of plate that can be included in a segmented curing ring in accordance with one or more embodiments described herein.
FIGS. 4A-C illustrate perspectives of non-limiting example base structures that can be included in a segmented curing ring in accordance with one or more embodiments described herein.
FIGS. 5A-C illustrate cross-sectional perspectives of an interface between plates and a base of a segmented curing ring in accordance with one or more embodiments described herein.
FIG. 6 illustrates an exploded perspective of a manufacturing process that can utilize a segmented curing ring along with a tire curing press machine to produce cured elastomer bands (e.g., NPT shear bands and/or shear band and tread assemblies) in accordance with one or more embodiments described herein.
FIG. 7 illustrates a partially exploded perspective of a tire mold that can utilize a segmented curing ring along with a tire curing press machine to produce cured elastomer bands (e.g., NPT shear bands and/or shear band and tread assemblies) in accordance with one or more embodiments described herein.
FIG. 8A illustrates another partially exploded perspective of a tire mold that can utilize a segmented curing ring along with a tire curing press machine to produce cured elastomer bands (e.g., NPT shear bands and/or shear band and tread assemblies) in accordance with one or more embodiments described herein.
FIG. 8B illustrates a cross-sectional perspective of a portion of a tire mold during a curing process to form an elastomer band for an NPT in accordance with one or more embodiments described herein.
FIG. 9 illustrates a perspective of one or more outer mold segments that can be utilized to impart a tread pattern onto the outer surface of an elastomer band (e.g., an NPT shear band) during a curing process in accordance with one or more embodiments described herein.

### DETAILED DESCRIPTION OF PREFERRED EMBODIMENTS

The present disclosure relates generally to methods and/or apparatuses for producing cured elastomer bands (e.g., shear bands) having a flat inner surface for use in non-pneumatic tires, as well as other tire applications having similar requirements. In particular, the present disclosure relates generally to adapting pneumatic tire manufacturing methods and apparatuses for producing NPTs that require an elastomer band (e.g., a shear band) with a flat inner interface. Such elastomer bands (e.g., shear bands) may be useful in NPT applications or other applications requiring an elastomer band (e.g., shear band) having a flat inner surface.

NPTs typically comprise a hub that is attachable to a vehicle's axis. Extending from the hub is a plurality of spokes, which further attach to a shear band. The spokes can be arranged in a pattern and are deformable by tension, buckling, compression, and/or bending during rolling of the NPT. The shear band can be a multi-layer structure with a tread band, which interfaces with the ground during operation of the NPT. The tension of the shear band on the spokes, and the strength of the spokes themselves, replaces the air pressure utilized by a pneumatic tire. Shear bands can be made from a polymer such as polyurethane and/or a rubber. To facilitate the connection between the spokes and the shear band, it is desirable for an inner surface of the shear band (e.g., a surface facing the axis of the NPT) to be flat along the axial direction of the tire. A curved, or deformed, inner surface can necessitate non-uniform spoke geometries, which in turn can cause manufacturing and/or performance challenges.

However, conventional manufacturing techniques and/or equipment used to produce pneumatic tires form a curved inner surface in the tire's carcass. The manufacturing of pneumatic tires for motor vehicles of nearly all sizes entails the steps of creating a carcass and attaching thereto the tread and sidewalls, which are made of uncured rubber. The combination of the carcass, the tread, and the sidewalls, prior to curing of the rubber, is called a "green tire." The final step in manufacturing pneumatic tires is the insertion of the green tire into a tire mold, where an inflatable bladder is used to press the green tire against the mold to achieve a desired shape and/or tread pattern. The tire mold is then heated to a sufficiently high temperature to bring about the curing process.

Typically, use of the bladder results in a curved inner surface on the tire along the axial direction. Thus, attempts to utilize pneumatic tire molds and bladders to manufacture NPTs can result in a shear band with an undesirable curve in the inner surface. As such, conventional NPT manufacturing techniques fail to use or adapt existing pneumatic tire molding technology to produce shear bands suitable for use in NPTs and other types of tires that require a shear band having a flat inner surface in the axial direction.

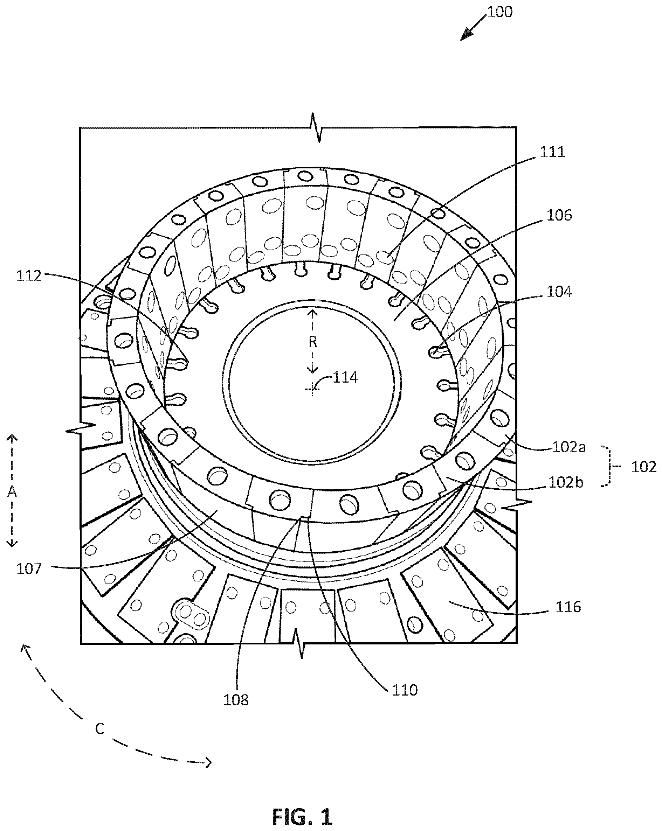

In various embodiments described herein, the apparatuses and/or methods of the present disclosure have several advantages including the incorporation of pneumatic tire molding and curing technology into the production of NPTs, which provides for cost savings, especially in terms of additional capital investment, as well as economies of scale. The structure, operation, and advantages of the present invention will become apparent upon consideration of the description herein below taken in conjunction with the accompanying figures (FIGs.1-9).

Additionally, various embodiments described herein can exhibit advantages over conventional compression processes utilized to manufacture elastomer bands (e.g., shear bands) for NPTs by enabling a venting of the molded part and/or stricter tolerance control over the dimensions of the resultant elastomer band (e.g., NPT shear band, which can include a tread pattern). For instance, in accordance with the various embodiments described herein, mold venting techniques utilized with pneumatic tires can be utilized to manufacture the NPT shear bands while precluding the trimming works required with compression molding processes typically utilized for NPT shear band manufacturing. Further, conventional compression processes require the mold to be bumped open during the curing stage to prevent rupture of the molded components. For example, the pressure of the rubber during the compression process can reach about 28 MPa; thus, the mold is typically bumped open during the curing to relieve the pressure, then the mold is re-closed. As such, the inner diameter of the shear band is preserved to a tolerance of, for example, 0.05 mm; however, the outer diameter of the shear band can vary up to, for example, 0.38 mm (e.g., due releasing the mold). Advantageously, the apparatuses, systems, and/or methods described herein can enable the inner and outer diameter of the NPT shear band to remain within, for example, a 0.1 mm tolerance, where an inflatable bladder can be utilized to compensate for the high hydraulic pressure utilized by the conventional compression process. Thus, the dimensions of the shear band can more closely match targeted dimensions (e.g., which can account for shrink rates of the rubber to meet the design dimensions of the resultant shear band).

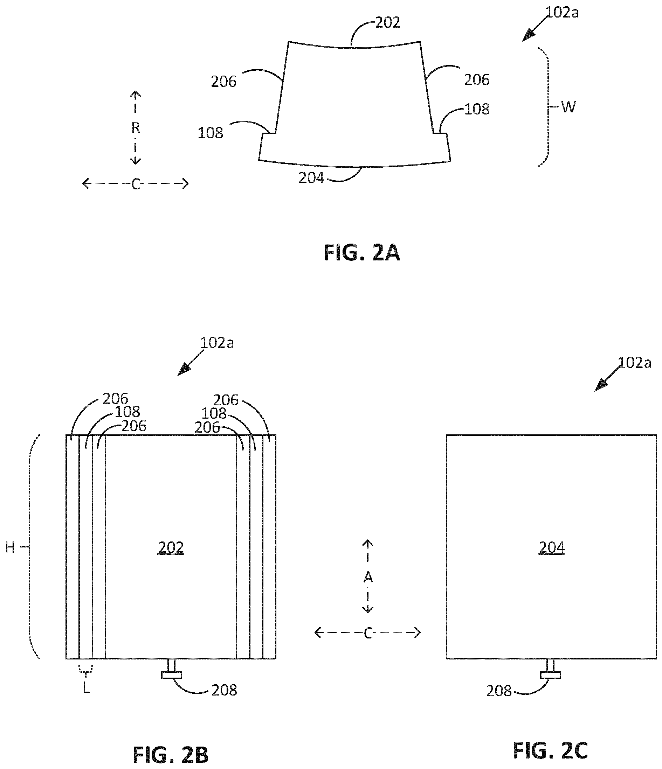

FIG. 1 depicts a segmented curing ring 100 that can be utilized to manufacture one or more cured elastomer bands (e.g., NPT shear bands and/or shear band and tread band assemblies) having a flat interior surface. For example, the segmented curing ring 100 can be a tire curing ring, such as a shear band curing ring. As shown in FIG. 1, the segmented curing ring 100 is formed by a plurality of plates 102 that are positioned at a distal radial end of channels 104 in the base 106 of the segmented curing ring 100. For example, the plurality of plates 102 can serve as a plurality of inner mold segments, where one or more molding segments of a tire curing press machine can serve as a plurality of outer mold segments during the curing process in accordance with one or more embodiments described herein. The base 106 and the plates 102 are described in more detail below with respect to FIGS. 2-8.

The plurality of plates 102 are oriented vertically along what will be an axial direction "A" of the NPT. When the plurality of plates 102 are placed in a radial orientation, an outer surface 107 of the plates 102, along what will be the circumferential direction "C" of the NPT, defines an interior geometry of a resultant elastomer band (e.g., shear band and/or shear band and tread band assembly) during the manufacturing process. For example, the outer surface 107 can serve as an inner molding surface, where the outer surface 107 can be substantially flat along the axial direction A and/or substantially continuous along the circumferential direction C. As shown in FIG. 1, the plurality of plates 102 comprise a first type of plate 102a and a second type of plate 102b, which can interlock with each other via projections 108 and recesses 110 positioned along the sidewalls of the plurality of plates 102. For instance, the first type of plates 102a can include projections 108 extending from the sidewalls of the first type of plates 102a in the circumferential direction C. The second type of plates 102b can include recesses 110 positioned in the sidewalls second type of plates 102b along the circumferential direction C. In various embodiments, the plurality of plates 102 can be composed of a metal or polymer material. Example materials that can compose the plurality of plates 102 include, but are not limited to: aluminum, steel, carbon fiber, nylon, ductile iron, epoxy, a combination thereof, and/or the like. In one or more embodiments, the plurality of plates 102 can have one or more voids 111 to manage thermodynamics or weight of the segmented curing ring 100. For instance, FIG. 1 depicts example plates 102 having voids 111 on an inner surface and/or a top surface. The one or more voids 111 can extend into the body of the plates 102 without translating to the outer surface 107. Alternatively, the plates 102 can be free of depressions 111.

As shown in FIG. 1, the base 106 can comprise a plurality of channels 104 oriented in what will be the radial direction "R" of the NPT. The channels 104 can be recessed into the base 106 and can extend through the base 106 along the radial direction R. In various embodiments, respective plates 102 can at least partially reside within respective channels 104. In various embodiments, the plurality of plates 102 can be composed of a metal or polymer material. Example materials that can compose the base 106 include, but are not limited to: aluminum, steel, carbon fiber, nylon, ductile iron, epoxy, a combination thereof, and/or the like.

As described further herein, the plurality of plates 102 can be initially placed into the base 106 via a first end 112 (e.g. an inner end) of the plurality of channels 104, which can be closest to a central axis 114 of the base 106. During the shear band manufacturing process, the plurality of segmented plates 102 can then be pushed along the radial direction R, where the plurality of channels 104 can guide the travel of the plurality of plates 102 and maintain a connection between the plates 102 and the base 106. Thereby, the plurality of plates 102 can travel (e.g., translate) along the channels 104 between a collapsed state of the segmented curing ring 100 and an expanded state of the segmented curing ring 100. In various embodiments, the number of plates 102 included in the segmented curing ring 100 can vary depending on the desired circumference of the resultant shear band. In some embodiments, the number of plates 102 comprising the segmented curing ring 100 can range from, for example, greater than or equal to 3 and less than or equal to 40.

As described further herein, an inflatable bladder can be utilized to translate the plurality of plates 102 along the channels 104 and press the outer surface 107 against the inner diameter of a green band during a curing process that results in an elastomer band (e.g., a NPT shear band and/or shear band and tread band assembly). For example, the green band can be positioned between the plates 102 and a curing press machine positioned on one or more wear plates 116 at least partially surrounding the plurality of plates 102 (e.g., adjacent to the outer surface 107). The outer surface 107 of the segmented curing ring 100 can ensure that the inner diameter surface of the resultant elastomer band (e.g., NPT shear band) remains flat, while the outer diameter surface of the resultant elastomer band (e.g., NPT shear band) can be molded to provide a tread pattern and can have a spherical molded radius. The flat inner diameter surface of the resultant elastomer band (e.g., NPT shear band) can facilitate coupling with one or more spokes, while the spherical molded radius of the outer diameter surface of the resultant elastomer band (e.g., NPT shear band) can facilitate footprint pressure and tread wear control of the NPT. Absent the plurality of plates 102, the inflatable bladder could deform during the curing process and the inner diameter surface of the resultant elastomer band (e.g., NPT shear band) would follow the spherical molded radius of the outer diameter surface of the resultant elastomer band (e.g., NPT shear band).

In some conventional NPT shear band manufacturing techniques, a metal ring is utilized to provide a flat molding surface for the inner diameter surface of the NPT shear band. For example, the metal ring can be expandable (e.g., by 50.8 mm), and the metal ring can allow the inner diameter surface of the resultant NPT shear band to be uncoupled from the spherical mold radius imparted to the outer diameter surface of the NPT shear band. However, minor deformities in the roundness of the metal ring can result in non-uniform forces exhibited by the NPT shear band. For instance, the spring rate of the shear band can be, for example, hundreds of pounds (1 pound = 0.454 kg) per 0.0254 mm; thus, where the metal ring is 0.05 mm out of round at a deformed location, an additional 200 pounds (1 pound = 0.454 kg) of force can be created at the position molded by the deformed location of the metal ring. Advantageously, the plurality of plates 102 can resist deformations that the metal ring may be susceptible to during the curing process (e.g., due to at least the greater rigidity of the plates 102).

FIG. 2A illustrates a top-down view of the first type of plates 102a. As shown in FIG. 2A, the first type of plates 102a can be tapered along the radial direction R. For example, a first inner surface 202 of the first type of plates 102a can face towards the central axis 114 along the radial direction R, whereas a first opposing surface 204 of the first type of plates 102a can form a portion of the outer surface 107 of the segmented curing ring 100. The first inner surface 202 of the first type of plates 102a can be narrower along the circumferential direction C than the first opposing surface 204. In some embodiments, the first type of plates 102a may have voids 111 (e.g., on the first inner surface 202) to manage thermodynamics or weight of the segmented curing ring 100, if desired. Additionally, the first type of plates 102a can include a first set of slanted sidewalls 206 that can include the projections 108 extending outward, away from the body of the first type of plate 102a, along the circumferential direction C. In one or more embodiments, each sidewall of the first set of slanted sidewalls 206 can include a projection 108. In various embodiments, the first type of plates 102a can have a width "W" along the radial direction R ranging from, for example, greater than or equal to 12.7 mm and less than or equal to 127 mm.

FIG. 2B illustrates a side perspective of the first inner surface 202 of the first type of plates 102a. In various embodiments, first type of plates 102a can extend along the axial direction A to a height "H" ranging from, for example, greater than or equal to 25.4 mm and less than or equal to 533.4 mm. Additionally, the projections 108 can extend from a body of the first type of plates 102a along the circumferential direction C to a length L ranging from, for example, less than or equal to 25.4 mm.

Further, as shown in FIG. 2B, the first type of plates 102a can include one or more anchors 208 extending from a bottom surface of the first type of plates 102a. In various embodiments, the anchors 208 can have a geometry designed to fit within the one or more channels 104. FIG. 2B illustrates an example embodiment in which the one or more anchors 208 have a "T-shape" architecture; however, alternate architectures are also envisaged. For example, in one or more embodiments, the anchors 208 can have a spherical or polygonal shape that complements an interior cross-section of the one or more channels 104, as described further herein.

FIG. 2C illustrates a side perspective of the first opposing surface 204. In one or more embodiments, the first opposing surface 204 can be flat along the axial direction A (e.g., along the vertical orientation of the segmented curing tire 100). In various embodiments, the first opposing surface 204 (e.g., a portion of the outer surface 107 of the segmented curing ring 100) can also be smooth (e.g., free of indentations and/or grooves).

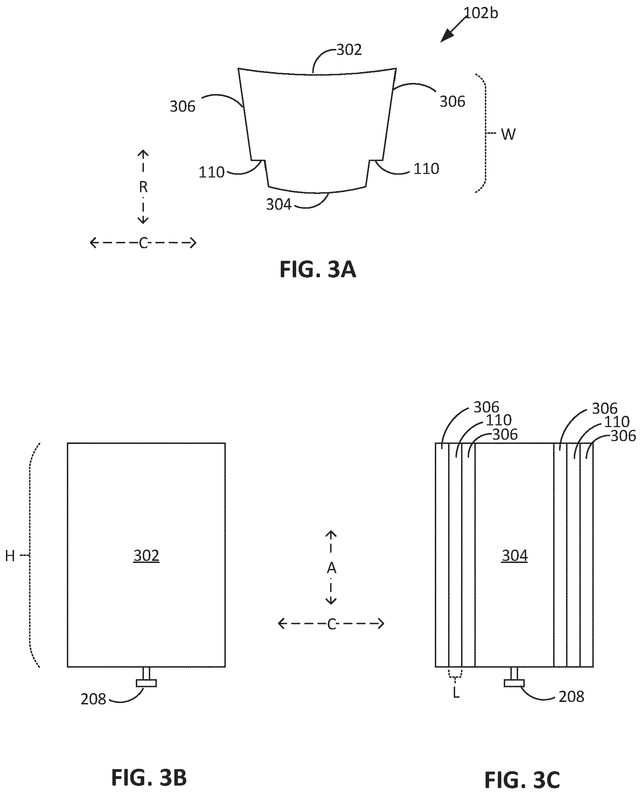

FIG. 3A illustrates a top-down view of the second type of plates 102b. As shown in FIG. 3A, the second type of plates 102b can have a complementary (e.g., an opposing) tapering along the radial direction R to the tapering of the first type of plates 102a. A second inner surface 302 of the second type of plates 102b can face towards the central axis 114 along the radial direction R, whereas a second opposing surface 304 of the second type of plates 102b can form another portion of the outer surface 107 of the segmented curing ring 100. The second inner surface 302 of the second type of plates 102b can be wider along the circumferential direction C than the second opposing surface 304. Additionally, the second type of plates 102b can include a second set of slanted sidewalls 306 that can include the recesses 110 extending into the second set of slanted sidewalls 306 toward the body of the second type of plate 102b, along the circumferential direction C. In one or more embodiments, each sidewall of the second set of slanted sidewalls 306 can include one or more recesses 110. In various embodiments, the second type of plates 102b can have an equivalent width "W" along the radial direction R as the width of the first type of plates 102a.

FIG. 3B illustrates a side perspective of the second inner surface 302 of the second type of plates 102b. In various embodiments, second type of plates 102b can extend along the axial direction A to an equivalent height H as the first type of plates 102a. Further, as shown in FIG. 3B, the second type of plates 102b can also include the one or more anchors 208 extending from a bottom surface of the second type of plates 102b. In some embodiments, the second type of plates 102b may have voids and/or depressions (e.g., on first inner surface 302) to manage thermodynamics and/or weight of the segmented curing ring 100, if desired.

FIG. 3C illustrates a side perspective of the second opposing surface 304. In one or more embodiments, the second opposing surface 304 can be flat along the axial direction A (e.g., along the vertical orientation of the segmented curing tire 100). Additionally, as shown in FIG. 3C, the recesses 110 can extend along the circumferential direction C, from the second set of slanted sidewalls 306, by a length L equivalent to that of the projections 108. In various embodiments, the second opposing surface 304 (e.g., a portion of the outer surface 107 of the segmented curing ring 100) can also be smooth (e.g., free of indentations and/or grooves).

As shown in FIG. 1, the one or more first type of plates 102a can be positioned adjacent to the one or more second type of plates 102b along the circumferential direction C. Thereby, the projections 108 of the first type of plate 102a can rest within the recesses 110 of the second type of plate 102b. Additionally, in one or more embodiments, the slope of the first set of slanted sidewalls 206 can match the slope of the second set of slanted sidewalls 306. Thus, as the plurality of plates 102 slide along the channels 104 to the expanded state of the segmented curing ring 100, the complementary tapering of the first type of plates 102a and the second type of plates 102b can enable the plates 102 to be positioned tightly together along the expanded circumference. In various embodiments, the number of plates 102 comprising the segmented curing ring 100 can be such that they create a continuous circle when engaged.

Additionally, the first opposing surface 204 of the first type of plates 102a and the second opposing surface 304 of the second type of plates 102b can be curved such that, when the segmented curing ring 100 is the expanded state, the plurality of first opposing surfaces 204 and the plurality of second opposing surface 304 collectively form an outer surface 107 having a roundness that corresponds to the desired inner diameter of a resultant elastomer band (e.g., NPT shear band and/or shear band and tread band assembly) cured using the segmented curing ring 100. For example, the curvature of the first opposing surface 204 and the second opposing surface 304 can be defined such that the outer surface 107 has a circular geometry of uniform roundness (e.g., a circle with a uniform diameter). Accordingly, the curvature of the first opposing surface 204 and the second opposing surface 304 can be based on the number of plates 102 and the desired circumference of the outer surface 107 (e.g., along the circumferential direction C) while the segmented curing ring 100 is the expanded state.

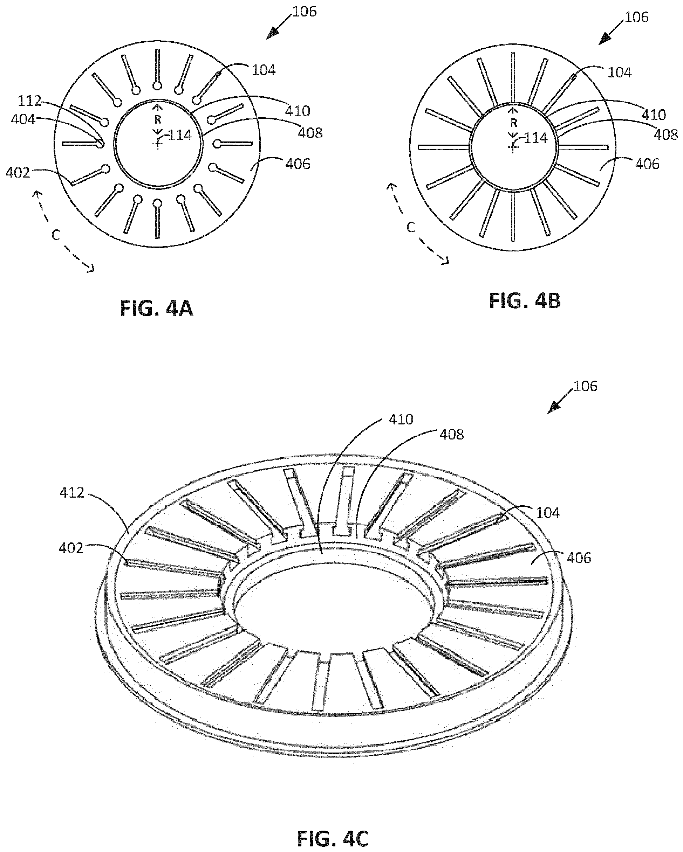

FIGS. 4A and 4B illustrate top-down views of example bases 106 of the segmented curing ring 100. In various embodiments, the base 106 has a plurality of channels 104 extending from a first end 112 to a second end 402 along the radial direction R. As shown in FIGS. 4A and 4B, the second end 402 can be a furthest end of the channels from the central axis 114. FIG. 4A depicts a first example base 106 in which the first end 112 terminates at a cavity 404 in the top surface 406 of the base 106. In various embodiments, the cavity 404 can have a larger diameter or width than the width (e.g., along the circumferential direction C) of the channels 104. Thereby, the anchors 208 can be inserted into the cavities 404; however, once the anchors 208 slide radially into the channels 104, the narrowed width of the channels 104 can prevent the anchors 208 from exiting the channel 104 through the top surface 406.

FIG. 4B depicts a second example base 106 in which the channels 104 can have a uniform, or substantially uniform, width (e.g., along the circumferential direction C), and the anchors 208 can enter the channels 104 at the first end 112 via an opening in the inner sidewall 408 of the base 106. As shown in FIGS. 4A and 4B, the base 106 can include a void proximal to the central axis 114, where the void can be defined by an inner sidewall 408 of the base 106. In one or more embodiments, the anchors 208 can be positioned within the void and then moved along the radial direction R into openings in the inner sidewall 408 that are in fluid communication with the channels 104. As described above, once the anchors 208 have entered the channels 104, the width of the channels 104 at the top surface 406 can be narrower than a width of the anchors 208; thereby, the anchors 208 can be prevented from exiting the channels 104 via the top surface 406.

Each channel 104 is capable of receiving an anchor 208 of a plate 102. For example, the plurality of plates 102 can attach to the channels 104 through the one or more anchors 208, which can have geometry that is complementary to an inner cavity of the channels 104. The anchors 208 can be inserted into the channels 104 and thereby hold the plurality of plates 102 in their vertical orientation relative to the base 106. Preferably, the interface between the anchors 208 and channels 104 is secure so that the connection of the plates 102 to the base 106 does not detach during operation of the methods disclosed herein. Further, the interface between the anchors 208 and the channels 104 enables the plates 102 to translate radially from an inner portion of the base 106 (e.g., near the central axis 114) to an outer portion of the base 106 (e.g., outward in the radial direction R) without being detached from the base 106. The plurality of plates 102 can be situated along the channels 104 to provide a given geometry to the outer surface 107 of the segmented curing ring 100.

In one or more embodiments, the base 106 can further comprise a flange 410 positioned adjacent to the inner sidewall 408 (e.g., as shown in FIGS. 4A and 4B). For instance, the flange 410 can facilitate securing the base 106 to a mounting station and/or other equipment utilized in the manufacturing of an NPT.

FIG. 4C depicts another view of the example base 106 shown in FIG. 4B. As discussed herein, an opening in the inner sidewall 408 of the base 106 can render the plurality of channels 104 accessible along the radial direction R, from the central axis 114 towards the perimeter of the base 106. Additionally, in one or more embodiments the base 106 can include a ridge 412 positioned about the circumference of the base 106, which can abut the plurality of plates 102 when the segmented curing ring 100 is in the expanded state.

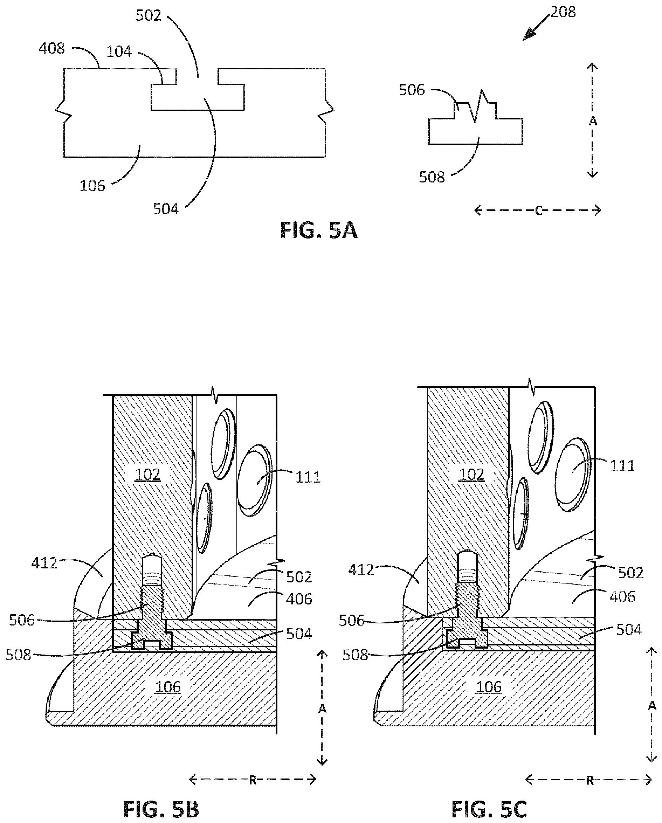

FIG. 5A depicts a cross-sectional view of an example portion of the base 106 and an example anchor 208. As shown in FIG. 5A, an interior geometry of the channels 104 can include a channel opening 502 and a channel body 504. The channel opening 502 can be at the top surface 406 of the base 106. In one or more embodiments, the channel opening 502 can enable a stem 506 of the anchor 208 to extend through the top surface 406 of the base 106 while traveling along the channels 104. The channel body 504 can be located within the base 106 and can accommodate the architecture of a distal end 508 of the anchors 208. For instance, the distal end 508 of the anchor 208 can have a width (e.g., along the circumferential direction C) that is greater than the width of the stem 506; whereas the width of the channel opening 502 can be narrower than a width of the channel body 504. Thereby, once positioned within the channel body 504, the anchor 208 can travel (e.g., translate) along the radial direction R, but not the axial direction A.

FIGS. 5B-C illustrate cross-sectional views of a portion of a plate 102 engaged with a portion of the base 106. For example, FIG. 5B depicts a cross-sectional view of the plate 102 approaching the expanded state of the segmented curing ring 100 (e.g., at a partially expanded state). FIG. 5C depicts a cross-sectional view of the plate 102 at the fully expanded state of the segmented curing ring 100. In one or more embodiments, the base 106 can further include a ridge 412 positioned at the circumference of the base 106. The ridge 412 can facilitate placement and/or support of the plurality of plates 102 while the segmented curing ring 100 is in the expanded state. For instance, FIG. 5B depicts a cross-section of the channel 104 along the radial direction R. As shown in FIG. 5B, the anchor 208 (e.g., the stem 506 of the anchor 208) can extend through the top surface 406 of the base 106 and into the channel body 504. In one or more embodiments, the anchor 208 can be a fastener (e.g., a screw or bolt) extending from the bottom of the plate 102, where the head of the fastener (e.g., the screw head or bolt head) can be the distal end 508 of the anchor 208. For instance, FIGS. 5B-5C depict an example embodiment in which the anchor 208 is a fastener screwed into a bottom of the associated plate 102 (e.g., via a thread engagement between the stem 506 of the anchor 208 and an inner cavity located in the bottom of the plate 102).

Between FIGS. 5B and 5C, the anchor 208 is engaged within an example channel 104 and is shown translating along the radial direction R towards the ridge 412 to achieve the fully expanded state of the segmented curing ring 100; thus illustrating movement of the vertical oriented plate 102 along the channel 104 vis-à-vis the interface between the anchor 208 and channel body 504. In an exemplary embodiment, the anchor 208 is a bolt aligned with the vertical axis of the plate 102 (e.g., along the axial direction A) and extends from the plate 102 into the channel 104 of the base 106. Suitable anchor 208 and channel body 504 geometries should be capable of securing the plates 102 to the base 106 in a desired configuration.

In one or more embodiments, the channels 104 can further house one or more springs (not shown) to assist in demolding the plurality of plates 102 from the resultant elastomer band (e.g., NPT shear band and/or shear band and tread band assembly) once the curing process is complete. For example, one or more springs can be positioned within the channel body 504 at the second end 402 of the channels 104. The springs can bias the one or more anchors 208 away from the radial edge of the base 106 and toward the central axis 114. During the curing process, the plurality of plates 102 can be translated to the second end 402 of the channels 104, where the spring can be compressed via the expansion force provided by an inflatable bladder that moves the plates 102. Once the curing process is complete, the bladder can be deflated, thereby relieving the expansion force and enabling the springs to decompress by forcing the plurality plates 102 towards the central axis 114 and away from the resultant elastomer band (e.g., NPT shear band and/or shear band and tread band assembly).

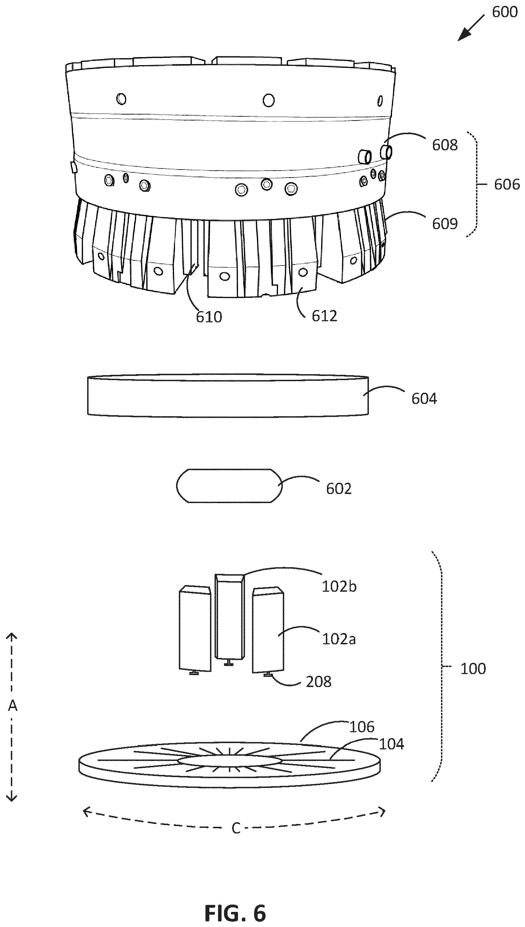

FIG. 6 illustrates an exploded view of a manufacturing process 600 that can be implemented using the segmented curing ring 100 for curing an elastomer band (e.g., NPT shear band and/or shear band and tread band assembly) in accordance with one or more embodiments described herein. During an example of the manufacturing process 600 for an elastomer band (e.g., NPT shear band and/or shear band and tread band assembly) one or more of the following steps can be practiced using the segmented curing ring 100. One of ordinary skill in the art will recognize that the manufacturing process 600 is not limited to specific order described below. Rather, one or more the manufacturing features can be practiced in an alternate order.

First, the plurality of plates 102 can be inserted into the channels 104 of the base 106 to assemble the segmented curing ring 100 shown in FIG. 1. For example, the plurality of plates 102 can serve as a plurality of inner mold segments in accordance with one or more embodiments described herein. As exemplified in FIG. 1, the plates 102 can be inserted into a first end 112 of the channels 104, nearest the central axis 114 of the base 106. For instance, the plates 102 can be inserted into the base 106 such that the anchors 208 are positioned into the cavities 404 of the channels 104. In another instance, the plates 102 can be inserted into the base 106 by positioning the plates 102 into the middle void of the base 106 and then moving the plates 102 in the radial direction R such that the anchors 208 enter openings in the inner sidewall 408 of the base 106 to engage the channel bodies 504.

While three plates 102 are shown in the example illustration of FIG. 6, each of the plurality of plates 102 can be inserted into the base 106 at this stage of the manufacturing process 600. In one or more embodiments, the plates 102 can be inserted into the channels 104 in a clockwise or counter-clockwise sequence along the circumferential direction C, alternating between the first type of plates 102a and the second type of plates 102b.

Next, a bladder 602 can be positioned at, or in proximity to, the central axis 114 of the base 106. Any bladder 602 suitable for conventional pneumatic tire curing may be used in the methods of this disclosure. For example, the bladder 602 can be inflatable, and can be composed of an elastomeric material (e.g., a rubber, such as carbon black). At this stage of the manufacturing process 600, the bladder 602 can be in a collapsed, non-inflated or partially inflated state. Additionally, the bladder 602 can be positioned on the top surface 406 and/or the flange 410 of the base 106.

Next, a green band 604 can be placed on the base 106 surrounding the plurality of plates 102 and/or the bladder 602. The green band 604 can be composed of non-cured components of the NPT shear band to result from the manufacturing process 600. In one or more embodiments, the green band 604 can have a circumference that is equal to, or slightly less than, the circumference of the outer surface 107 when the segmented curing ring 100 is in the expanded state.

Next, the bladder 602 can be inflated so that the plurality of plates 102 are pushed radially along the channels 104 of the base 106 in an outward trajectory along the radial direction R toward the perimeter of the base 106. For example, the bladder 602 can be inflated until the plates 102 reach the ridge 510 of the base 106 and/or the second end 402 of the channels 104. Thus, inflation of the bladder 602 can cause the plurality of plates 102 to travel (e.g., translate) to their position within the expanded state of the segmented curing ring 100. As a result of the bladder 602 inflation, an outer surface 107 of the segmented curing ring 100 can be pressed against an inner surface of the green band 604. In one or more embodiments, inflation of the bladder 602 can force the plurality of plate 102 to slightly stretch the green band 604 along the radial direction. In one or more embodiments, the bladder 602 can be initially inflated to a holding pressure and then further inflated later in the manufacturing process to a higher pressure. For example, the holding pressure can serve to hold the plates 102 in the expanded state, or a partially expanded state; while the bladder 602 can be further inflated once one or more molds fully enclose the green band 604 (e.g., as described further herein). In one or more embodiments, the bladder 602 can be initially inflated to the holding pressure prior to placement of the green band 604 on the segmented curing ring 100 such that the plurality of plates 102 are translated to a partially expanded state, where the circumference of the outer surface 107 is smaller than the inner diameter of the green band 604. Subsequently, the bladder 602 can be further inflated, thereby translating the plurality of plates 102 to the fully expanded state, once one or more molds are positioned around the green band 604 (e.g., as described further herein).

Green bands 604 suitable for use in the present disclosure may be comprised of one or more materials including, but not limited to: neoprene (polychloroprene), polybutadiene (including cis-1,4-polybutadiene), polyisoprene (including cis-1,4-polyisoprene) (natural or synthetic), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM) (e.g., ethylene/propylene/dicyclopentadiene terpolymers), alkoxy-silyl end functionalized solution polymerized polymers (styrene-butadiene rubber, polybutadiene rubber, isoprene butadiene rubber, and styrene isoprene butadiene rubber), silicon-coupled, tin-coupled star-branched polymers, the like, and any combination thereof.

In some embodiments, the green band 604 may have a thickness (e.g., extending along the radial direction R when positioned around the plates 102) ranging, for example, from greater than or equal to 2.54 mm and less than or equal to 50.8 mm.

A tire curing press machine 606 can then be positioned over the green band 604, segmented curing ring 100, and bladder 602. The tire curing press machine 606 can be any type of press suitable for curing pneumatic tires. For example, the tire curing press machine 606 can cure the green band 604 through the application of heat (e.g., via steam) and/or pressure. In various embodiments, operation of the tire curing press machine 606 can cure the components of the green band 604 and/or can impart a tread pattern into an outer surface of the green band 604 (e.g., a side facing away from the segmented curing ring 100); thereby resulting in the final form of the resultant elastomer band (e.g., NPT shear band and/or shear band and tread band assembly). For instance, in one or more embodiments the tire curing press machine 606 can cure the green band 604 at an internal curing pressure ranging from, for example, greater than or equal to 1 MPa and less than or equal to 2.07 MPa. In various embodiments, the curing energy can be comprised of heat conducted through the thickness of the plurality of plates 102.

FIG. 6 depicts an example tire curing press machine 606 comprising an actuator 608 and one or more segmented tire molds 609 (e.g., a pneumatic tire segmented tire mold). As shown in FIG. 6, the segmented tire molds 609 can be comprised of molding segments 610 (e.g., which can face the green band 604 when the tire curing press machine 606 is placed around the segmented curing ring 100) and a wedged surface 612. In one or more embodiments, the molding segments 610 can have a spherical radius to impart a molded radius to an outer diameter surface (e.g., an outer surface) of the resultant elastomer band (e.g., NPT shear band and/or shear band and tread band assembly). In accordance with various embodiments described herein, the one or more molding segments 610 can serve as one or more outer mold segments during the manufacturing process 600. The actuator 608 is preferably a conventional actuator that may be useful in pneumatic tire molding processes. For example, the actuator 608 can be circular in shape and capable of accommodating the one or more segmented tire molds 609.

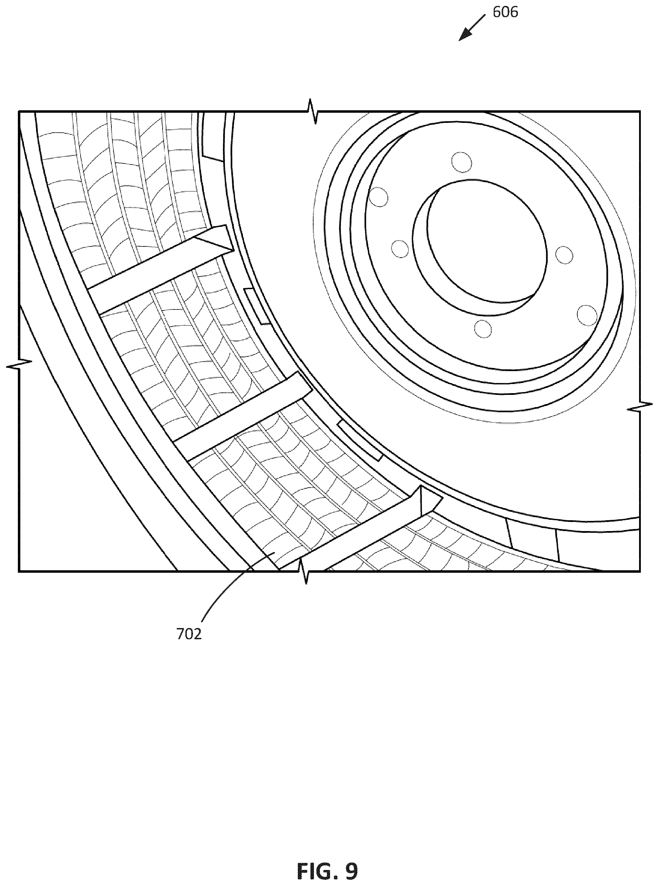

As the actuator 608 presses downward to the base of the segmented tire mold 609, the actuator 608 can engage the wedged surfaces 612 such that the slope of the wedged surfaces 612 causes the segmented tire mold 609 to be pushed inwardly along the radial direction R. As the segmented tire mold 609 is pushed inwardly, the molding segments 610 move toward each other and the green band 604 (e.g., where the green band 604 is positioned around the outer surface 107 of the segmented curing ring 100, as described above). For instance, FIG. 6 depicts a separation between adjacent molding segments 610, where activation of the actuator 608 can bring the segments radially toward each other to engage the green band 604. Thereby, as the actuator 608 is activated, the molding segment 610 is pressed inwardly and against the outer surface of the green band 604. The molding segment 610 can include a surface with an indentation pattern to impart indents and/or ridges into the outer surface of the green band 604 and thereby form a tread pattern (e.g., as shown in FIG. 9).

Further, as the molding segment 610 is pressed against the outer surface of the green band 604, the inner surface of the green band 604 can be supported by the segmented curing ring 100, which in turn is maintained in its expanded state due to the pressure provided by the inflated bladder 602. Additionally, while the green band 604 is being pressed between the inner surface of the molding segment 610 and the outer surface 107 of the segmented curing ring 100, the tire curing press machine 606 can heat the green band 604 to a curing temperature. The temperature and pressure provided by the tire pressing machine 606 can impart a tread pattern on the outer surface of the resultant NPT shear band, while the outer surface 107 of the segmented curing ring 100 can impart a flat inner surface to the resultant NPT shear band.

Following operation of the tire curing press machine 606, the bladder 602 can be deflated, and the plates 102 can travel inwardly along the radial direction R about the channels 104; thereby releasing the resultant NPT shear band from a pressurized (e.g., stretched) state. The resultant shear bands may be used in NPT applications in addition to any other applications that require a shear band having a smooth inner surface. Advantageously, the segmented curing ring 100 can be utilized with tire curing press machines 606 employed during pneumatic tire curing processes (e.g., including the use of pneumatic tire segmented curing molds 609) to cure NPT shear bands. Additionally, the tire curing press machines 606 can utilize molding segments 610 capable of producing a wider range of NPT shear band dimensions than typically available to shear bands formed from conventional compression molding processes. For instance, various embodiments described herein can achieve a resultant NPT shear band having an outer diameter (e.g., along the radial direction R) of up to 34 inches or 863.6 mm (e.g., up to 812.8 mm, or up to 736.6 mm). Also, while FIG. 6 exemplifies the manufacturing process 600 utilizing a segmented mold curing press, embodiments which utilize a two-piece mold (e.g., as the molding segments 610) and two-piece curing presses (e.g., as the tire curing press machine 606) are also envisaged.

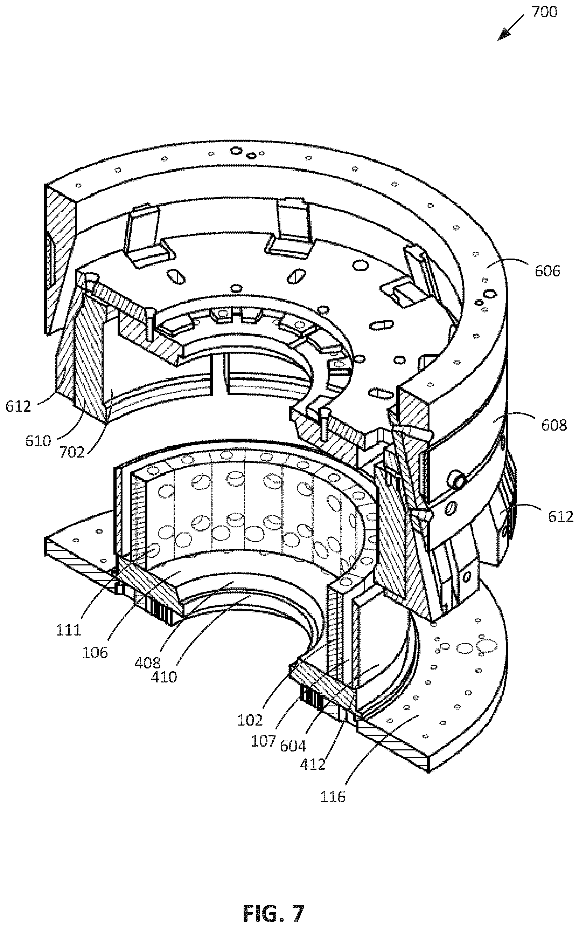

FIG. 7 depicts a partially exploded view of the segmented curing ring 100 during one or more stages of the manufacturing process 600. As shown in FIG. 7, the tire curing press machine 606 and the segmented curing ring 100 can serve as inner and outer mold segments of a tire mold 700 for curing the green band 604 and forming the cured elastomer band (e.g., NPT shear band and/or shear band and tread band assembly). For clarity of image, the positioning of the bladder 602 adjacent to the central axis 114 of the segmented curing ring 100 is not shown. As shown in FIG. 7, the green band 604 is positioned around the outer surface 107 of the plurality of plates 102. As described herein, the plurality of plates 102 can translate along the plurality of channels 104 to transition the segmented curing ring 100 into an expanded state; where the outer surface 107 can be pressed against, and/or provide support for, an inner surface of the green band 604 (e.g., a surface of the green band 604 facing the central axis 114 of the segmented curing ring 100).

Additionally, the tire curing press 606 can be positioned over the segmented curing ring 100 and green band 604. For example, the tire curing press 606 can be positioned onto the one or more wear plates 116 such that the molding surface 702 of the molding segments 610 can be adjacent to an outer surface of the green band 604, where the outer surface can be opposite the inner surface of the green band 604. While FIG. 7 depicts the one or more molding surfaces 702 as smooth surfaces, in various embodiments the one or more molding surfaces 702 can have one or more textured patterns (e.g., as shown in FIG. 9) to impart a desired tread onto the green band 604. Thereby, the green band 604 can be located between a molding surface 702 of the one or more molding segments 610 and the outer surface 107 of the segmented curing ring 100. As described herein, as the actuator 608 engages the wedged surfaces 612, the one or more molding segments 610 (and thereby the one or more molding surfaces 702) can be pressed towards the central axis 114 of the segmented curing ring 100. Thus, the one or more molding segments 610 can be pressed towards each other and against the green band 604 during the manufacturing process 600.

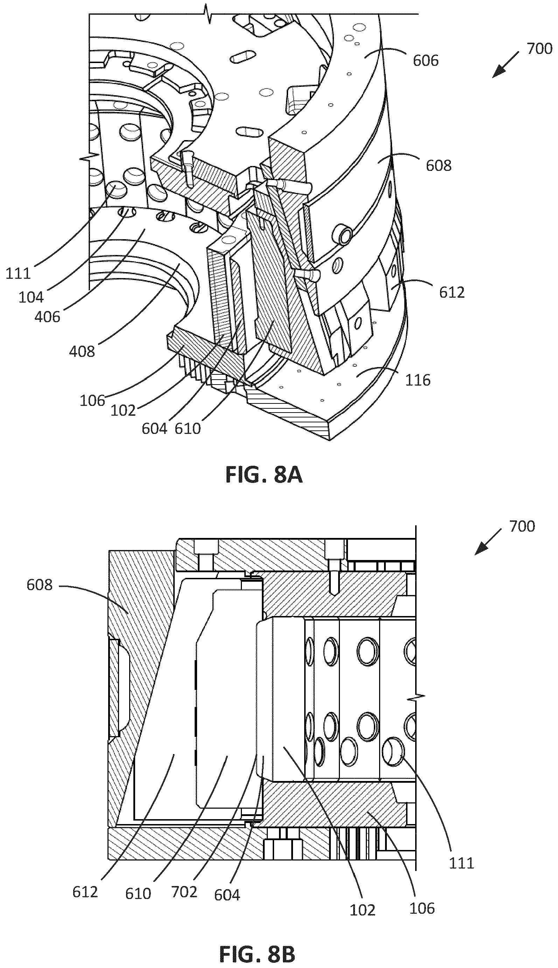

FIG. 8A depicts another partially exploded view of the segmented curing 100 during one or more stages of the manufacturing process 600. In comparison to FIG. 7, FIG. 8A depicts the plurality of plates 102 positioned in a fully expanded state rather than a partially expanded state. For example, portions of the plurality of channels 104 are more readily visible in FIG. 8A, as the plurality of plates 102 have translated along the plurality of channels 104 along the radial direction R.

FIG. 8B depicts the segmented curing ring 100, green band 604, and tire curing press 606 during the manufacturing process 600, where the tire curing press 606 has fully actuated the one or more molding surfaces 610 against the green band 604 during a curing process. As shown in FIG. 8B, the one or more actuated molding surfaces 702 can abut the outer surface (e.g., along the radial direction R) of the green band 604, where the one or more plurality of plates 102 can abut the inner surface (e.g., along the radial direction R) of the green band 604. For clarity of image, the bladder 602 is not shown; however, during this stage of the manufacturing process 600, the bladder 602 can be in an inflated state to maintain the plurality of plates 102 in the expanded state.

As shown in FIG. 8B, the green band 604 can have beveled and/or curved side edges. In one or more embodiments, the beveled side edge of the green band 604 can abut a slanted surface of the ridge 412; such that, as the plurality of plates 102 translate to the expanded state, at least a portion of the a side edge of the green band 604 is sandwiched between the plurality of plates 102 and the ridge 412 (e.g., as shown in FIG. 8B).

FIG. 9 depicts an interior view of the tire curing press 606 in accordance with one or more embodiments described herein. As described herein, the one or more molding surfaces 702 can include one or more ridges, protrusions, grooves, indentations, and/or the like configured to impart a tread pattern into the outer surface of the green band 604 (e.g., into a surface of the green band 604 that is opposite to an inner surface of the green band 604, which abuts the plurality of plates 102 during the manufacturing process 600). In accordance with various embodiments described herein, operation of the tire curing press 606 can press the one or more molding surfaces 702 against the outer surface of the green band 604, thereby imparting a tread pattern and/or curvature to the outer surface of the resultant shear band.

## Claims

1. A tire mold for curing an elastomer band, the tire mold (700) comprising a base plate (106) having a plurality of channels (104) oriented along a radial direction, a plurality of inner segments configured to engage an inner radius of the elastomer band (604), and a plurality of outer segments configured to engage an outer radius of the elastomer band (604), **characterized in that** the plurality of inner segments include a first type of inner segment (102a) and a second type of inner segment (102b), wherein the first type of inner segment has a projection (108) extending from a sidewall of the first type of inner segment, wherein the second type of inner segment has a recess (110) extending into a side wall of the second type of inner segment, and wherein (i) the first type of inner segment is positioned adjacent to the second type of inner segment to form a portion of an outer surface configured to engage the inner radius of the elastomer band (604) and/or (ii) the projection (108) abuts the recess (110) while the first type of inner segment and the second type of inner segment are positioned at an end of the plurality of channels (104) nearest a periphery of the base plate (106).

2. The tire mold of claim 1 wherein each inner segment includes an anchor (208) for reception into a respective channel of the plurality of channels (104), and wherein the plurality of inner segments are configured to translate along the radial direction.

3. The tire mold of claim 1 or 2, wherein the plurality of inner segments include a substantially flat surface configured to impart a flat architecture to the inner radius of the elastomer band (604) in an axial direction that is perpendicular to the radial direction, and wherein the plurality of outer segments include a textured surface configured to impart a tread pattern to the outer radius of the elastomer band during the curing process.

4. The tire mold of at least one of the previous claims, wherein the plurality of channels (104) include a channel body (504) that houses the anchor (208) and a channel opening (502) located on a top surface of the base plate (106) that extends along the radial direction.

5. The tire mold of at least one of the previous claims, wherein the first type of inner segment (102a) tapers off toward from a central axis (114) along the radial direction, and wherein the second type of inner segment (102b) tapers off away from the central axis (114) along the radial direction.

6. A method for curing a green elastomer band, the method comprising:
assembling a segmented curing ring (100) comprising a plurality of inner mold segments configured to travel across a base plate (106) along a radial direction;
positioning a green elastomer band (604) between the plurality of inner segments and one or more outer mold segments; and
exerting an outward pressure on an inner surface of the green elastomer band (604) via the plurality of inner mold segments while exerting an inward pressure on an outer surface of the green elastomer band via the one or more outer mold segments;
wherein the plurality of inner segments include a first type of inner segment (102a) and a second type of inner segment (102b), wherein the first type of inner segment has a projection (108) extending from a sidewall of the first type of inner segment, wherein the second type of inner segment has a recess (110) extending into a side wall of the second type of inner segment, and wherein (i) the first type of inner segment is positioned adjacent to the second type of inner segment to form a portion of an outer surface configured to engage the inner radius of the elastomer band (604) and/or (ii) the projection (108) abuts the recess (110) while the first type of inner segment and the second type of inner segment are positioned at an end of the plurality of channels (104) nearest a periphery of the base plate (106).

7. The method of claim 6, further comprising:
positioning a tire curing press machine (606) around the green elastomer band (604) and segmented curing ring (100); and
activating the tire curing press machine (606) to cure the green elastomer band (604) and exert the inward pressure.

8. The method of claim 6 or 7, wherein the exerting the outward pressure comprises:
positioning an inflatable bladder (602) at a central axis (114) of the segmented curing ring (100);
inflating the inflatable bladder (602) to push the plurality of inner mold segments outwardly along the radial direction and exert the outward pressure; and, optionally, wherein
the one or more outer mold segments impart a tread pattern onto the outer surface of the green elastomer band (604), and wherein the plurality of inner mold segments render the inner surface flat along an axial direction that is perpendicular to the radial direction.

9. The method of at least one of the claims 6 to 8, wherein the assembling the segmented curing ring (100) comprises attaching the plurality of inner mold segments to the base plate (106) by inserting anchors (208) extending from bottoms of the plurality of inner mold segments into channels (104) that are recessed into the base plate (106), said channels (104) preferably extending through the base plate (106) along the radial direction.

## Patentansprüche

1. Form für einen Reifen zur Vulkanisierung eines Elastomerstreifens, wobei die Form für einen Reifen (700) eine Basisplatte (106) umfasst, die mehrere Kanäle (104) aufweist, die entlang einer radialen Richtung ausgerichtet sind, eine Anzahl von inneren Sektoren, die derart ausgestaltet sind, dass sie mit einem inneren Radius des Elastomerstreifens (604) in Kontakt kommen, und eine Anzahl von äußeren Sektoren, die derart ausgestaltet sind, dass sie mit einem äußeren Radius des Elastomerstreifens (604) in Kontakt kommen; **dadurch gekennzeichnet, dass** die Anzahl von inneren Sektoren einen ersten Typ eines inneren Sektors (102a) und einen zweiten Typ eines inneren Sektors (102b) enthalten; wobei der erste Typ eines inneren Sektors einen Vorsprung (108) aufweist, der sich von einer Seitenwand des ersten Typs eines inneren Sektors erstreckt; wobei der zweite Typ eines inneren Sektors eine Aussparung (110) aufweist, die sich in eine Seitenwand des zweiten Typs eines inneren Sektors erstreckt; und wobei (i) der erste Typ eines inneren Sektors angrenzend zu dem zweiten Typ eines inneren Sektors angebracht ist, um einen Abschnitt einer äußeren Oberfläche zu bilden, der derart ausgestaltet ist, dass er mit dem inneren Radius des Elastomerstreifens (604) in Kontakt kommt, und/oder (ii) der Vorsprung (108) an der Aussparung (110) anliegt, während der erste Typ eines inneren Sektors und der zweite Typ eines inneren Sektors an einem am nächsten am Rand der Basisplatte gelegenen Ende der Vielzahl von Kanälen liegen.

2. Form für einen Reifen nach Anspruch 1, wobei jeder innere Sektor eine Verankerung (208) enthält, die dazu bestimmt ist, in einen jeweiligen der oben genannten Kanäle (104) eingepasst zu werden; und wobei die Anzahl von inneren Sektoren derart ausgestaltet sind, dass sie sich in der axialen Richtung bewegen.

3. Form für einen Reifen nach Anspruch 1 oder 2, wobei die Anzahl von inneren Sektoren eine im Wesentlichen ebene Oberfläche enthalten, die derart ausgestaltet ist, dass sie dem inneren Radius des Elastomerstreifens (604) in einer axialen Richtung, die sich senkrecht zur radialen Richtung erstreckt, eine flache Struktur verleiht; und wobei die Anzahl von äußeren Sektoren eine strukturierte Oberfläche enthalten, die derart ausgestaltet ist, dass sie dem äußeren Radius des Elastomerstreifens während des Vulkanisierungsprozesses eine Lauffläche verleiht.

4. Form für einen Reifen nach mindestens einem der vorstehenden Ansprüche, wobei die Anzahl von Kanälen (104) einen Kanalkörper (504), der die Verankerung (206) umgibt, sowie eine Kanalöffnung (502), die an der oberen sich in der radialen Richtung erstreckenden Oberfläche der Basisplatte (106) angebracht ist, enthalten.

5. Form für einen Reifen nach mindestens einem der vorstehenden Ansprüche, wobei der erste Typ eines inneren Sektors (102a) sich in Richtung einer Mittelachse (114) entlang der radialen Richtung verjüngt und wobei der zweite Typ eines inneren Sektors (102b) sich entlang der radialen Richtung von der Mittelachse (114) weg verjüngt.

6. Verfahren zum Vulkanisieren eines unvulkanisierten Elastomerstreifens, wobei das Verfahren das Folgende umfasst:
das Zusammenbauen eines in Sektoren unterteilten Vulkanisierungsrings (100), der eine Anzahl von inneren Formsektoren umfasst, die derart ausgestaltet sind, dass sie sich in der radialen Richtung über den Abstand einer Basisplatte (106) bewegen;
das Anbringen eines unvulkanisierten Elastomerstreifens (604) zwischen der Anzahl von inneren Formsektoren und dem einem oder den mehreren äußeren Formsektoren; und
das Ausüben eines nach außen gerichteten Drucks auf eine innere Oberfläche des unvulkanisierten Elastomerstreifens (604) über die Anzahl von inneren Formsektoren, während ein nach innen gerichteter Druck auf eine äußere Oberfläche des unvulkanisierten Elastomerstreifens über den einen oder die mehreren äußeren Formsektoren ausgeübt wird;
wobei die Anzahl von inneren Sektoren einen ersten Typ eines inneren Sektors (102a) und einen zweiten Typ eines inneren Sektors (102b) enthalten; wobei der erste Typ eines inneren Sektors einen Vorsprung (108) aufweist, der sich von einer Seitenwand des ersten Typs eines inneren Formsektors aus erstreckt; wobei der zweite Typ eines inneren Formsektors eine Aussparung (118) aufweist, die sich in eine Seitenwand des zweiten Typs eines inneren Sektors hinein erstreckt; und wobei (i) der erste Typ eines inneren Sektors angrenzend zu dem zweiten Typ eines inneren Sektors angebracht ist, um einen Abschnitt einer äußeren Oberfläche zu bilden, der derart ausgestaltet ist, dass er mit dem inneren Radius des Elastomerstreifens (604) in Kontakt kommt, und/oder der Vorsprung (108) an der Aussparung (110) anliegt, während der erste Typ eines inneren Sektors und der zweite Typ eines inneren Sektors an einem Ende der Anzahl von Kanälen (104) angebracht sind, das an einem Umfang der Basisplatte (106) am nächsten liegt.

7. Verfahren nach Anspruch 6, das Folgendes umfasst:
das Anbringen einer Reifenvulkanisierungspresse (606) um das unvulkanisierte Elastomerstreifen (604) und den segmentierten Vulkanisierungsring (100) herum; und
das Aktivieren der Reifenvulkanisierungspresse (606), um das unvulkanisierte Elastomerstreifen (604) zu vulkanisieren und den nach innen gerichteten Druck auszuüben.

8. Verfahren nach Anspruch 6 oder 7, wobei der nach außen gerichtete Druck umfasst:
das Anbringen einer aufblasbaren Innenschicht (602) auf einer Mittelachse (114) des sektorierten Vulkanisierungsrings (100);
das Aufblasen der aufblasbaren Innenschicht (602), um die inneren Formsektoren in der radialen Richtung nach außen zu drücken und den nach außen gerichteten Druck auszuüben; und, optional, wobei
der eine oder die mehreren äußeren Formsektoren eine Lauffläche der äußeren Oberfläche des unvulkanisierten Elastomerstreifens (604) verleihen; und wobei die mehreren inneren Formsektoren die innere Oberfläche entlang einer axialen Richtung, die sich senkrecht zur radialen Richtung erstreckt, flach ausbilden.

9. Verfahren nach mindestens einem der Ansprüche 6 bis 8, wobei das Zusammenbauen des sektorierten Vulkanisierungsrings (100) das Folgende umfasst: das Befestigen der Anzahl von inneren Formsektoren an der Basisplatte (106) durch Einfügen von sich aus den Basen der Anzahl von inneren Formsektoren erstreckenden Verankerungen (208) in Kanäle (104), die in der Basisplatte (106) eingesenkt sind; wobei die oben genannten Kanäle (104) sich vorzugsweise entlang der radialen Richtung durch die Basisplatte (106) erstrecken.

## Revendications

1. Moule pour bandage destiné à la vulcanisation d'une bande élastomère, dans lequel le moule pour bandage (700) comprend une plaque de base (106) qui possède un certain nombre de canaux (104) qui sont orientés le long d'une direction radiale, un certain nombre de secteurs internes qui sont configurés pour entrer en contact avec un rayon interne de la bande élastomère (604) et un certain nombre de secteurs externes qui sont configurés pour entrer en contact avec un rayon externe de la bande élastomère (604) ; **caractérisé en ce que** lesdits plusieurs secteurs internes englobent un premier type de secteur interne (102a) et un deuxième type de secteur interne (102b) ; dans lequel le premier type de secteur interne possède une saillie (108) qui s'étend à partir d'un flanc du premier type de secteur interne ; dans lequel le deuxième type de secteur interne possède un évidement (110) qui s'étend jusque dans un flanc du deuxième type de secteur interne ; et dans lequel (i) le premier type de secteur interne est disposé en position adjacente au deuxième type de secteur interne afin de former une portion d'une surface externe qui est configurée pour entrer en contact avec le rayon interne de la bande élastomère (604) et/ou (ii) la saillie (108) vient buter contre l'évidement (110), tandis que le premier type de secteur interne et le deuxième type de secteur interne sont disposés à une extrémité desdits plusieurs canaux (104), qui est située le plus près d'une périphérie de la plaque de base (106).

2. Moule pour bandage selon la revendication 1, dans lequel chaque secteur interne englobe un dispositif d'ancrage (208) qui est destiné à venir se loger dans un canal respectif parmi lesdits plusieurs canaux (104) ; et dans lequel lesdits plusieurs secteurs internes sont configurés pour se déplacer le long de la direction axiale.

3. Moule pour bandage selon la revendication 1 ou 2, dans lequel lesdits plusieurs secteurs internes englobent une surface essentiellement plate qui est configurée pour conférer une architecture de forme plate au rayon interne de la bande élastomère (604) dans une direction axiale qui est perpendiculaire à la direction radiale ; et dans lequel lesdits plusieurs secteurs externes englobent une surface texturée qui est configurée pour conférer une sculpture de bande de roulement au rayon externe de la bande élastomère au cours du processus de vulcanisation.

4. Moule pour bandage selon au moins une des revendications précédentes, dans lequel lesdits plusieurs canaux (104) englobent un corps de canal (504) qui entoure le dispositif d'ancrage (206) et une ouverture de canal (502) qui est disposée sur une surface supérieure de la plaque de base (106) qui s'étend le long de la direction radiale.

5. Moule pour bandage selon au moins une des revendications précédentes, dans lequel le premier type de secteur interne (102a) se rétrécit dans la direction d'un axe central (114) le long de la direction radiale, et dans lequel le deuxième type de secteur interne (102b) se rétrécit en s'éloignant de l'axe central (114) le long de la direction radiale.

6. Procédé destiné à la vulcanisation d'une bande élastomère non vulcanisée, dans lequel le procédé comprend le fait de :
assembler un anneau de vulcanisation sectorisé (100) qui comprend un certain nombre de secteurs de moule internes qui sont configurés pour se déplacer sur la distance d'une plaque de base (106) le long d'une direction radiale ;
disposer une bande élastomère non vulcanisée (604) entre lesdits plusieurs secteurs internes et un ou plusieurs secteurs de moule externes ; et
exercer une pression orientée vers l'extérieur sur une surface interne de la bande élastomère non vulcanisée (604) par l'intermédiaire desdits plusieurs secteurs de moule internes, tout en exerçant une pression orientée vers l'intérieur sur une surface externe de la bande élastomère non vulcanisée par l'intermédiaire desdits un ou plusieurs secteurs de moule externes ;
dans lequel lesdits plusieurs secteurs internes englobent un premier type de secteur interne (102a) et un deuxième type de secteur interne (102b) ; dans lequel le premier type de secteur interne possède une saillie (108) qui s'étend à partir d'un flanc du premier type de secteur interne ; dans lequel le deuxième type de secteur interne possède un évidement (118) qui s'étend jusque dans un flanc du deuxième type de secteur interne ; et dans lequel (i) le premier type de secteur interne est disposé en position adjacente au deuxième type de secteur interne afin de former une portion d'une surface externe qui est configurée pour entrer en contact avec le rayon interne de la bande élastomère (604) et/ou la saillie (108) vient buter contre l'évidement (110), tandis que le premier type de secteur interne et le deuxième type de secteur interne sont disposés à une extrémité desdits plusieurs canaux (104) qui est située le plus près d'une périphérie de la plaque de base (106).

7. Procédé selon la revendication 6, qui comprend le fait de :
disposer une presse de vulcanisation de bandage (606) autour de la bande élastomère non vulcanisée (604)et de l'anneau de vulcanisation sectorisé (100) ; et
activer la presse de vulcanisation de bandage (606) afin de vulcaniser la bande élastomère non vulcanisée (604) et d'exercer la pression orientée vers l'intérieur.

8. Procédé selon la revendication 6 ou 7, dans lequel la pression orientée vers l'extérieur comprend :
le placement d'un calandrage intérieur gonflable (602) sur un axe central (114) de l'anneau de vulcanisation sectorisé (100) ;
le gonflage du calandrage intérieur gonflable (602) afin de pousser lesdits secteurs de moule internes vers l'extérieur le long d'une direction radiale et d'exercer la pression orientée vers l'extérieur ; et, de manière facultative, dans lequel
lesdits un ou plusieurs secteurs de moule externes confèrent une sculpture de bande de roulement à la surface externe de la bande élastomère non vulcanisée (604) ; et dans lequel lesdits plusieurs secteurs de moule internes rendent la surface interne plate le long d'une direction axiale qui est perpendiculaire à la direction radiale.

9. Procédé selon au moins une des revendications 6 à 8, dans lequel l'assemblage de l'anneau de vulcanisation sectorisé (100) comprend le fait de fixer lesdits plusieurs secteurs de moule internes à la plaque de base (106) en insérant des dispositifs d'ancrage (208) qui s'étendent à partir des bases des secteurs de moule internes jusque dans des canaux (104) qui sont évidés dans la plaque de base (106) ;
dans lequel lesdits canaux (104) de préférence s'étendent à travers la plaque de base (106) le long de la direction radiale.
